# EUROPEAN PATENT APPLICATION

(11) **EP 3 564 651 A1**
(43) Date of publication of application: **06.11.2019**
(21) Application number: 17887354.3
(22) Date of filing: 29.12.2017
(51) Int. Cl.: G01N 21/25

(54) **MULTI-RESOLUTION SPECTROMETER**

(30) Priority: 29.12.2016 CN 201611249038
(71) Applicant: Nuctech Company Limited, Beijing 100084 (CN)
(72) Inventor: LIU, Haihui, Beijing 100084 (CN); WANG, Hongqiu, Beijing 100084 (CN); YI, Yumin, Beijing 100084 (CN); ZHANG, Jianhong, Beijing 100084 (CN); WANG, Ankai, Beijing 100084 (CN)
(74) Representative: Isarpatent
(86) International application number: PCT/CN2017/119915
(87) International publication number: WO 2018/121744

(57) **Abstract**

A multi-resolution spectrometer, includes: an incident slit (10) configured to receive an incident light beam; a collimating device (20) configured to collimate the light beam from the incident slit; a dispersing device (30) configured to disperse the light beam collimated by the collimating device (20) so as to form a plurality of sub-beams (61, 62) having different wavelengths; an imaging device (40) and a photon detector array (50), the imaging device (40) being configured to image the plurality of sub-beams (61, 62) on the photon detector array (50) respectively, the photon detector array (50) being configured to convert light signals of the plurality of sub-beams (61, 62) imaged thereon into electrical signals for forming a spectrogram, wherein the incident slit (10) has a first slit portion (11) and a second slit portion (12), and the second slit portion (12) has a greater width than the first slit portion (11).

## Description

### CROSS-REFERENCE TO RELATED APPLICATION

This application claims priority of Chinese Patent Application No. 201611249038.8 filed on December 29, 2016 in the State Intellectual Property Office of China, the disclosure of which is incorporated herein by reference.

### BACKGROUND OF THE DISCLOSURE

### Field of the Disclosure

The present disclosure relates to a technical field of spectrometer, and in particular to a multi-resolution spectrometer.

### Description of the Related Art

A spectrometer is an analytical instrument used widely, especially for identification and analysis of substances. A spectrometer can separate light signals with different wavelengths mixed together by means of a dispersing element, arrange them onto a detector, and finally obtain spectral lines that indicate the signal intensity distribution at different wavelengths. Resolution of a spectrometer represents the spectrometer's resolving power between two signals at adjacent wavelengths, and determines the precision of characteristic information carried by the resulted spectrogram. In spectrum inspection and analysis, resolution parameters of a spectrometer have important significance in accurately identifying the substances and determining their chemical components and relative contents.

Existing spectrometers typically use a slit with single width, and the resolution is constant after the slit width is determined. There is a trade-off between resolution and sensitivity.

### SUMMARY OF THE DISCLOSURE

The present application is aimed to provide a multi-resolution spectrometer, which is applicable to collecting a spectrogram with multiple resolutions by means of an incident slit of a specific shape.

In an embodiment of the present disclosure, there is provided a multi-resolution spectrometer, including: an incident slit configured to receive an incident light beam; a collimating device configured to collimate the light beam from the incident slit; a dispersing device configured to disperse the light beam collimated by the collimating device so as to form a plurality of sub-beams having different wavelengths respectively; an imaging device and a photon detector array, the imaging device being configured to image the plurality of sub-beams on the photon detector array respectively, the photon detector array being configured to convert light signals of the plurality of sub-beams imaged thereon into electrical signals for forming a spectrogram, wherein the incident slit has a first slit portion and a second slit portion, and the second slit portion has a greater width than the first slit portion.

In an embodiment, the dispersing device is configured to separate the plurality of sub-beams in a first direction, and the photon detector array has a plurality of rows of detecting units, wherein detecting units in each row of detecting units are arranged along a second direction perpendicular to the first direction.

In an embodiment, patterns formed by each sub-beam of the plurality of sub-beams on the photon detector array include a first pattern portion corresponding to the first slit portion and a second pattern portion corresponding to the second slit portion, and the second pattern portion has a greater width than the first pattern portion.

In an embodiment, each spectral line in the spectrogram is generated by superposing the electrical signals outputted from all detecting units in one row of detecting units.

In an embodiment, the photon detector array has a first region and a second region successively arranged in the second direction, the first pattern portion is formed in the first region and the second pattern portion is formed in the second region, the spectrogram includes a first sub-spectrogram and a second sub-spectrogram, each spectral line in the first sub-spectrogram is generated by superposing the electrical signals outputted from detecting units in the first region of one row of the detecting units, and each spectral line in the second sub-spectrogram is generated by superposing the electrical signals outputted from detecting units in the second region of the row of the detecting units.

In an embodiment, the slit further includes a third slit portion, and the third slit portion has a greater width than the second slit portion.

In an embodiment, patterns formed by each sub-beam of the plurality of sub-beams on the photon detector array include a first pattern portion corresponding to the first slit portion, a second pattern portion corresponding to the second slit portion and a third pattern portion corresponding to the third slit portion, and the second pattern portion has a width greater than that of the first pattern portion and less than that of the third pattern portion.

In an embodiment, the photon detector array has a first region in which the first pattern portion is formed, a second region in which the second pattern portion is formed and a third region in which the third pattern portion is formed, the first region, the second region and the third region being successively arranged in the second direction, and wherein the spectrogram includes a first sub-spectrogram, a second sub-spectrogram and a third sub-spectrogram, each spectral line in the first sub-spectrogram is generated by superposing the electrical signals outputted from detecting units in the first region of one row of the detecting units, each spectral line in the second sub-spectrogram is generated by superposing the electrical signals outputted from detecting units in the second region of the row of the detecting units, and each spectral line in the third sub-spectrogram is generated by superposing the electrical signals outputted from detecting units in the third region of the row of the detecting units.

In an embodiment, the incident slit has a shape with width gradient.

In an embodiment, the collimating device includes a collimating lens or a concave mirror, the dispersing device includes a dispersing grating, and the imaging device includes a converging lens or a concave mirror.

With the multi-resolution spectrometer in at least one of the above embodiments of the present disclosure, it can generate a spectrogram with multiple resolutions for multiple wavelengths upon one collection of the incident light beam, by providing the incident slit having respective slit portions with different widths.

### BRIEF DESCRIPTION OF THE DRAWINGS

FIG. 1 schematically shows a multi-resolution spectrometer according to an embodiment of the present disclosure;
FIGS. 2a, 2b and 2c schematically show examples of the shape of the incident slit of a multi-resolution spectrometer according to an embodiment of the present disclosure, respectively;
FIG. 3 schematically shows an example of pattern, which is imaged on the photon detector array through the dispersing device, of the light beam that has passed through the slit; and
FIG. 4 schematically shows spectral lines in a spectrogram.

### DETAILED DESCRIPTION OF THE EMBODIMENTS

Technical solutions of the present disclosure will be described hereinafter in more detail by the way of embodiments with reference to the accompanied drawings. The same or similar reference numerals refer to the same or similar elements throughout the description. The explanation to the embodiments of the present disclosure with reference to the accompanied drawings is intended to interpret the general concept of the present disclosure, rather than being construed to limit the present disclosure.

According to the general concept of the present disclosure, it provides a multi-resolution spectrometer, including: an incident slit configured to receive an incident light beam; a collimating device configured to collimate the light beam from the incident slit; a dispersing device configured to disperse the light beam collimated by the collimating device so as to form a plurality of sub-beams having different wavelengths; an imaging device and a photon detector array, the imaging device being configured to image the plurality of sub-beams on the photon detector array respectively, the photon detector array being configured to convert light signals of the plurality of sub-beams imaged thereon into electrical signals for forming a spectrogram, wherein the incident slit has a first slit portion and a second slit portion, and the second slit portion has a greater width than the first slit portion.

Additionally, for the purpose of explanation, many specific details are set forth in the following description to provide a comprehensive understanding of the disclosed embodiments. It is apparent that, however, one or more embodiments may also be implemented without these specific details.

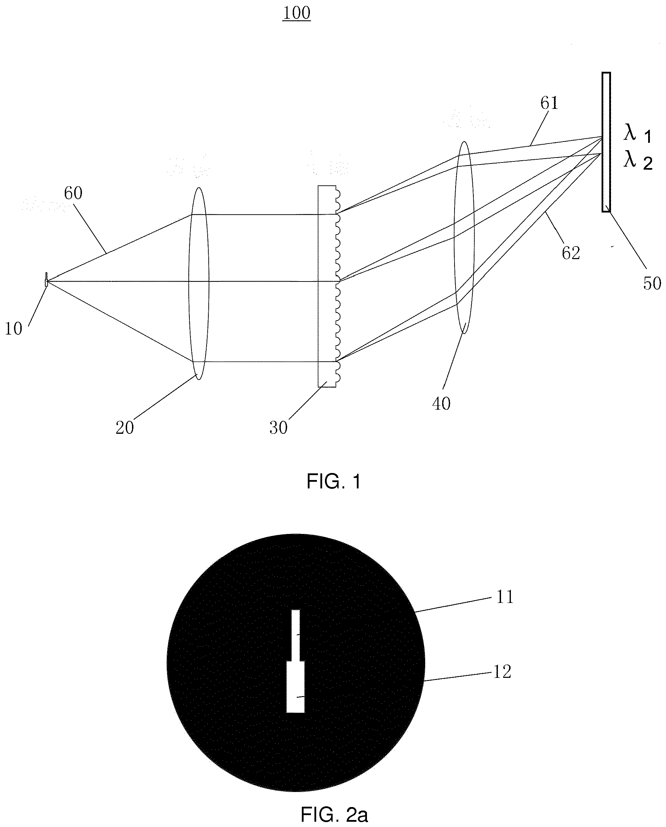

FIG. 1 schematically shows a multi-resolution spectrometer 100 according to an embodiment of the present disclosure. The multi-resolution spectrometer 100 may include an incident slit 10, a collimating device 20, a dispersing device 30, an imaging device 40 and a photon detector array 50. The incident slit 10 is configured to receive an incident light beam. The collimating device 20 is configured to collimate the light beam 60 from the incident slit 10. The dispersing device 30 is configured to disperse the light beam collimated by the collimating device 20 so as to form a plurality of sub-beams 61, 62 with different wavelengths (for example, with wavelengths λ₁ and λ₂, respectively). The imaging device 40 is configured to image the plurality of sub-beams 61, 62 on the photon detector array 50 respectively. The photon detector array 50 is configured to convert light signals of the plurality of sub-beams 61, 62 imaged thereon into electrical signals for forming a spectrogram. As can be shown in Fig. 2a, the incident slit 10 has a first slit portion 11 and a second slit portion 12, and the second slit portion 12 has a greater width than the first slit portion 11.

In the design and development of spectrometer system, the width of the incident slit directly affects the resolution, that is, the narrower the slit is, the higher the resolution will be; in contrast, the wider the slit is, the lower the resolution will be. The resolution can be improved by decreasing the width of the slit monotonously, but decreasing the width of the slit will reduce the light flux , i.e., the signal strength will be reduced. If the width of the whole slit is uniform, only one resolution can be achieved. The incident slit 10 in the multi-resolution spectrometer according to the embodiments of the present disclosure has at least two slit portions with different widths, so that the patterns formed by the sub-beams on the photon detector array 50 can achieve multiple resolutions for different wavelengths. Thus, a spectrogram with multiple resolutions for different wavelengths can be generated upon one collection of the incident light beam. This can provide multiple choices for the user, so as to reach a better compromise between the resolution and the light flux requirements.

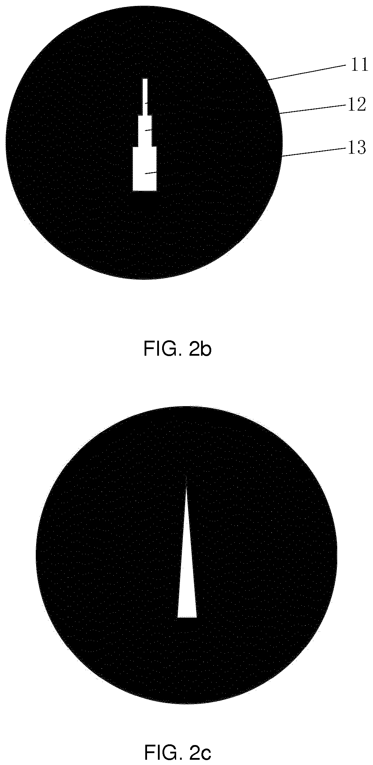

Although the first slit portion 11 and the second slit portion 12 are mentioned in the above embodiment, it is not limited thereto in the embodiments of the present application, for example, the incident slit 10 can further include a third slit portion 13 (as shown in Fig. 2b), and the third slit portion 13 has a greater width than the second slit portion 12. It will be appreciated by those skilled in the art that the incident slit 10 can alternatively include four, five or more slit portions with different widths.

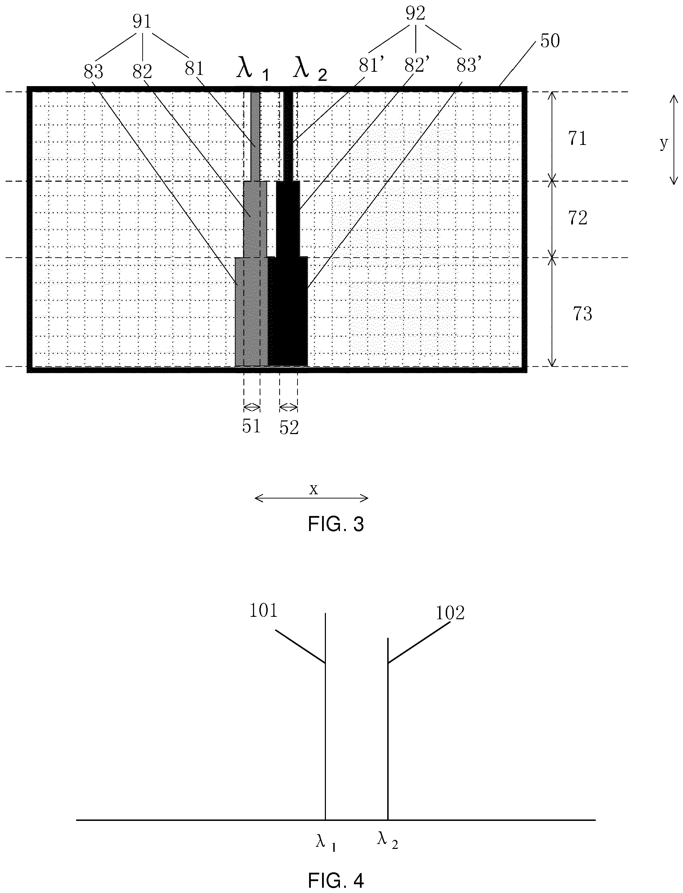

In an example, the dispersing device 30 (for example a dispersing grating) may be configured to separate the plurality of sub-beams 61 and 62 in the first direction (such as x direction as shown in FIG. 3), and the photon detector array 50 has a plurality of rows of detecting units 51, 52. Detecting units in each row of detecting units 51, 52 are arranged along a second direction (such as y direction as shown in FIG. 3) that is perpendicular to the first direction. This means that sub-beams 61 and 62 with different wavelengths are separated in the space, so that the photon detector array 50 can receive the optical signals of the light beam with different wavelength components.

As an example, patterns formed by each sub-beam of the plurality of sub-beams 61 and 62 on the photon detector array 50 include a first pattern portion 81, 81' corresponding to the first slit portion 11 and a second pattern portion 82, 82' corresponding to the second slit portion 12 respectively, and the second pattern portion 82, 82' has a width greater than that of the first pattern portion 81, 81'. As shown in FIG.3, the first sub-beam pattern 91 is formed by the first sub-beam 61 with wavelength λ₁ on the photon detector array 50, and the second sub-beam pattern 92 is formed by the second sub-beam 62 with wavelength λ₂ on the photon detector array 50. The first sub-beam pattern 91 has a first pattern portion 81 and a second pattern portion 82, and the second sub-beam pattern 92 also has a first pattern portion 81' and a second pattern portion 82'. As can be seen from FIG.3, the width of the first pattern portion 81, 81' is less while the width of the second pattern portion 82, 82' is greater, but the distance between the centres of the adjacent second pattern portions 82, 82' is the same as the distance between the centres of the adjacent first pattern portions 81, 81'. As such, the adjacent first pattern portions 81, 81' can be recognized, even the sub-beams are more densely distributed, while in the same circumstance, the adjacent second pattern portions 82, 82' cannot be recognized. That is to say, the resolution of the first pattern portion 81, 81' is higher than that of the second pattern portion 82, 82'.

As an example, FIG. 3 also illustrates that the first sub-beam pattern 91 and the second sub-beam pattern 92 also include third pattern portions 83, 83' when the incident slit 10 further includes a third slit portion 13. As described in the above, more slit portions can be provided in the embodiments of the present application, and the first sub-beam pattern 91 and the second sub-beam pattern 92 may further include a fourth, fifth or more pattern portions accordingly.

In an example, each spectral line 101, 102 in the spectrogram (as shown in FIG. 4) may be generated by superposing the electrical signals outputted from all detecting units 51, 52 of one row of detecting units 51, 52. In this case, a single spectrogram can be generated, and the resolution of the single spectrogram is a trade-off among the resolutions of the respective pattern portions (for example, the first pattern portion 81, 81' and the second pattern portion 82, 82', or the first pattern portion 81, 81', the second pattern portion 82, 82' and the third pattern portion 83, 83').

In another example, the photon detector array 50 has a first region 71 and a second region 72 which are successively arranged in the second direction (such as, y direction in FIG. 3). The first pattern portion 81, 81' is formed in the first region 71 and the second pattern portion 82, 82' is formed in the second region 72. The spectrogram includes a first and second sub-spectrograms, each spectral line in the first sub-spectrogram is generated by superposing the electrical signals outputted from detecting units in the first region 71 of one row of the detecting units 51, 52, and each spectral line in the second sub-spectrogram is generated by superposing the electrical signals outputted from detecting units in the second region 72 of the row of the detecting units 51, 52. In such way, it can generate a spectrogram with at least two resolutions for different wavelengths upon one collection of the incident light beam. As described above, the high wavelength resolution will result in weak optical signal (less optical flux), however, it is beneficial for the user of the spectrometer to seek for a best balance between the wavelength resolution and the optical signal intensity in the application with high demands on signal analysis, and it might be required to analyse a spectrogram with more than two resolutions for different wavelengths so as to improve the accuracy of the spectrometer. Therefore, it is helpful to optimize the detected signal of the spectrometer by providing a spectrogram with multiple resolutions for different wavelengths upon one collection of the incident slit (or one imaging).

As an example shown in FIG. 3, patterns formed by each sub-beam of the plurality of sub-beams 61 and 62 on the photon detector array 50 include a first pattern portion 81, 81' corresponding to the first slit portion 11, a second pattern portion 82, 82' corresponding to the second slit portion 12 and a third pattern portion 83, 83' corresponding to the third slit portion 13 respectively, and the second pattern portion 82, 82' has a width greater than that of the first pattern portion 81, 81' and less than that of the third pattern portion 83, 83'. It is possible to provide a spectrogram with three resolutions for different wavelengths based on one incident slit. In an example, the photon detector array 50 has a first region 71, a second region 72 and a third region 73 which are successively arranged in the second direction (such as y direction in FIG. 3). The first pattern portion 81, 81', the second pattern portion 82, 82' and the third pattern portion 83, 83' are formed in the first region 71, the second region 72 and the third region 73, respectively. The spectrogram includes a first sub-spectrogram, a second sub-spectrogram and a third sub-spectrogram, each spectral line in the first sub-spectrogram is generated by superposing the electrical signals outputted from detecting units in the first region 71 of one row of the detecting units 51, 52, each spectral line in the second sub-spectrogram is generated by superposing the electrical signals outputted from detecting units in the second region 72 of the row of the detecting units 51, 52, and each spectral line in the third sub-spectrogram is generated by superposing the electrical signals outputted from detecting units in the third region 73 of the row of the detecting units 51, 52. In the above example, the first, second and third sub-spectrograms have different wavelength resolutions. The first pattern portion 81, 81', the second pattern portion 82, 82' and the third pattern portion 83, 83' represent three different wavelengths. The narrower the pattern portion is, the less the pixels in the detector that will be occupied will be and the higher the wavelength resolution will be. Thus, in the example of FIG. 3, the first sub-spectrogram has a higher wavelength resolution than the second sub-spectrogram, and the second sub-spectrogram has a higher wavelength resolution than the third sub-spectrogram. Three sub-spectrograms with different wavelength resolutions are provided at the same time, so that the applicability for the detection of the spectrometer can be further improved.

In an example, the incident slit 10 may have a shape with width gradient, as shown in FIG. 2c. The incident slit 10 of such shape can also be divided into several slit portions with different widths. In the examples as shown in FIGS. 2a and 2b, each slit portion has constant width. As for the example in FIG. 2c, widths of the divided slit portions are not constant since the width is gradually changed. Comparing with the incident slit that includes individual slit portions with constant widths (for example, with stepped shape), the example in FIG. 2c has an advantage that the respective slit portions and respective regions in the photon detector array 50 (such as the first region 71, the second region 72 and the third region 73) can be divided as required so as to obtain the respective sub-spectrograms flexibly, but has an advantage that there will be crosstalk between the adjacent wavelengths.

Although FIGS. 2a to 2c show some examples of the incident slit, the shapes of the incident slit in the embodiments of the present disclosure are not limited thereto. For example, the centres of the respective slit portions of the same incident slit can be located on the same central line (as shown in FIGS. 2a to 2c), but they cannot be located on the same central line (i.e., there are transverse shift between the respective slit portions). Again, for example, the widths of the respective slit portions of the same incident slit may be increased in sequence (as shown in FIGS. 2a to 2c), but they can be arranged in any way, for example, with regard to FIG. 2b, the widest slit portion can be located between the other two slit portions rather than locating on the most lower portion.

In an embodiment of the present disclosure, each of the sub-beams 71, 72 has a first sub-beam portion (corresponding to the first pattern portion 81, 81') and a second sub-beam portion (corresponding to the second pattern portion 82, 82'). In an embodiment of the present disclosure, the dispersing device can separate the incident light beam 60 in the first direction (such as x direction in FIG. 3) into a plurality of sub-beams, and the plurality of sub-beams have different wavelength, and the respective slit portions with different widths of the incident slit can separate each sub-beam in the second direction (such as y direction in FIG. 3) into individual sub-beams with different widths so as to obtain different resolutions for different wavelengths. As an example, in the multi-resolution spectrometer according to the embodiments of the present disclosure, the individual slit portions of the incident slit 10 can be arranged in the second direction, however, it is not necessarily the case. For example, the individual slit portions of the incident slit 10 can be arranged in any direction other than the second direction, so that the pattern portions such as the first pattern portion 81, 81', the second pattern portion 82, 82' and the third pattern portion 83, 83' formed by sub-beams on the photon detector array 50 can be arranged in the second direction, and the imaging direction in the light path of the multi-resolution spectrometer can be adjusted to the expected direction (light beam folding or rotating components can be provided if required).

In the spectrum inspecting apparatus according to an embodiment of the present disclosure, the collimating device 20 may for example include a collimating lens or a concave mirror, the dispersing device 30 may for example include a dispersing grating, and the imaging device 40 may for example include a converging lens or a concave mirror. However, embodiments of the present disclosure are not limited to this. The collimating device 20, the dispersing device 30 and the imaging device 40 may also use known collimating devices, dispersing devices and imaging devices in any other forms in the art. The multi-resolution spectrometer according to the embodiment of the present disclosure can be used in detecting multiple spectrums (for example, a Raman spectrum, an infrared spectrum and a fluorescent spectrum) and identifying the substance and so on.

Although the present disclosure has been explained with reference to the drawings, the embodiments shown in the drawings are merely illustrative, instead of limiting the present disclosure. Scales in the drawings are only illustrative, instead of limiting the present disclosure.

Although some embodiments of the general inventive concept are shown and explained, it would be appreciated by those skilled in the art that modifications and variations may be made in these embodiments without departing from the principles and spirit of the general inventive concept of the present disclosure, the scope of which is defined in the appended claims and their equivalents.

## Claims

1. A multi-resolution spectrometer, comprising:
an incident slit configured to receive an incident light beam;
a collimating device configured to collimate the light beam from the incident slit;
a dispersing device configured to disperse the light beam collimated by the collimating device so as to form a plurality of sub-beams having different wavelengths respectively;
an imaging device and a photon detector array, the imaging device being configured to image the plurality of sub-beams on the photon detector array respectively, the photon detector array being configured to convert light signals of the plurality of sub-beams imaged thereon into electrical signals for forming a spectrogram,
wherein the incident slit has a first slit portion and a second slit portion, and the second slit portion has a greater width than the first slit portion.

2. The multi-resolution spectrometer of claim 1, wherein the dispersing device is configured to separate the plurality of sub-beams in a first direction, and the photon detector array has a plurality of rows of detecting units, wherein detecting units in each row of detecting units are arranged along a second direction perpendicular to the first direction.

3. The multi-resolution spectrometer of claim 2, wherein patterns formed by each sub-beam of the plurality of sub-beams on the photon detector array comprise a first pattern portion corresponding to the first slit portion and a second pattern portion corresponding to the second slit portion, and the second pattern portion has a greater width than the first pattern portion.

4. The multi-resolution spectrometer of claim 3, wherein each spectral line in the spectrogram is generated by superposing the electrical signals outputted from all detecting units in one row of detecting units.

5. The multi-resolution spectrometer of claim 3, wherein the photon detector array has a first region and a second region successively arranged in the second direction, the first pattern portion is formed in the first region and the second pattern portion is formed in the second region, the spectrogram comprises a first sub-spectrogram and a second sub-spectrogram, each spectral line in the first sub-spectrogram is generated by superposing the electrical signals outputted from detecting units in the first region of one row of the detecting units, and each spectral line in the second sub-spectrogram is generated by superposing the electrical signals outputted from detecting units in the second region of the row of the detecting units.

6. The multi-resolution spectrometer of claim 2, wherein the slit further comprises a third slit portion, and the third slit portion has a greater width than the second slit portion.

7. The multi-resolution spectrometer of claim 6, wherein patterns formed by each sub-beam of the plurality of sub-beams on the photon detector array comprise a first pattern portion corresponding to the first slit portion, a second pattern portion corresponding to the second slit portion and a third pattern portion corresponding to the third slit portion, and the second pattern portion has a width greater than that of the first pattern portion and less than that of the third pattern portion.

8. The multi-resolution spectrometer of claim 7, wherein the photon detector array has a first region in which the first pattern portion is formed, a second region in which the second pattern portion is formed and a third region in which the third pattern portion is formed, the first region, the second region and the third region being successively arranged in the second direction, and wherein the spectrogram comprises a first sub-spectrogram, a second sub-spectrogram and a third sub-spectrogram, each spectral line in the first sub-spectrogram is generated by superposing the electrical signals outputted from detecting units in the first region of one row of the detecting units, each spectral line in the second sub-spectrogram is generated by superposing the electrical signals outputted from detecting units in the second region of the row of the detecting units, and each spectral line in the third sub-spectrogram is generated by superposing the electrical signals outputted from detecting units in the third region of the row of the detecting units.

9. The multi-resolution spectrometer of any one of claims 1 to 8, wherein the incident slit has a shape with width gradient.

10. The multi-resolution spectrometer of any one of claims 1 to 8, wherein the collimating device comprises a collimating lens or a concave mirror, the dispersing device comprises a dispersing grating, and the imaging device comprises a converging lens or a concave mirror.
